# EUROPEAN PATENT SPECIFICATION

(11) **EP 3 162 203 B1**
(45) Date of publication and mention of the grant of the patent: **16.06.2021**
(21) Application number: 16196021.6
(22) Date of filing: 27.10.2016
(51) Int. Cl.: A01M 1/14

(54) **PEST TRAP**
SCHÄDLINGSFALLE
PIÈGE À NUISIBLES

(30) Priority: 28.10.2015 GB 201519020
(43) Date of publication of application: 03.05.2017
(73) Proprietor: Pelsis Limited, Grimbald Crag Close Knaresborough North Yorkshire HG5 8PJ (GB)
(72) Inventor: Holmes, Tom, Knaresborough, North Yorkshire HG5 8PJ (GB)
(74) Representative: Appleyard Lees IP LLP

(56) References cited:
- EP-A2- 0 976 323
- US-A- 5 022 179
- US-A- 5 950 355
- US-B1- 7 748 159

## Description

This invention relates to a flying pest trap.

A flying pest trap typically comprises a housing containing an attracting element, such as an electrically powered light source that emits UV light (usually in addition to visible light), and an immobilisation element, such as a glueboard. The glueboard is a board carrying an adhesive that retains the pests when they make contact with the glueboard.

The flying pest trap functions by attracting flying pests, such as insects including various types of fly and moth, to the light source. When in the vicinity of the light source the pest will explore the area and come into contact with the glueboard and thereby become immobilised. The glueboard can periodically be replaced when it becomes loaded with trapped pests.

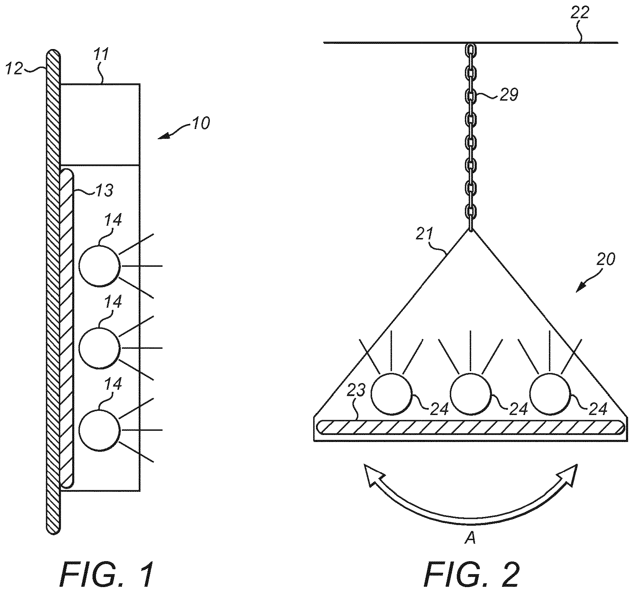

One prior art example of a flying pest trap is a wall-mounted trap 10, shown in FIG. 1. A housing 11 of the trap is mounted to a wall 12 in a substantially vertical configuration, with a glueboard 13 being disposed in a substantially vertical plane parallel to the wall 12, and UV light sources 14 being disposed so as to project light substantially horizontally away from the wall 12 via apertures (not shown) in the trap 10.

Whilst mounting the trap 10 to the wall 12 means that the trap is relatively unobtrusive and allows for simple access during service/maintenance (for example, replacement of the glueboard 13), difficulties arise in that the substantially vertical glueboard 13 is less effective than a horizontally-disposed glue board, because insects prefer to land on horizontal, rather than vertical surfaces.

A further prior art example of a flying pest trap is a ceiling-suspended trap 20, shown in FIG. 2. A housing 21 of the trap 20 is suspended from a ceiling 22 of the room by means of chains 29. A glueboard 23 of the trap 20 is disposed in a generally horizontal plane, with UV light sources 24 being disposed above the glueboard 23 so as to project light upwards from the trap 20.

Whilst the horizontal glueboard 23 is relatively effective, difficulties arise. Particularly, installing such traps is time consuming and difficult, because ceilings are typically more difficult to access than walls. Furthermore, when the trap 20 is subsequently serviced or maintained after installation, the suspended nature of the trap 20 causes the housing 21 to swing (as generally indicated by arrow A), causing inconvenience to the service engineer. Still further, it is known that the optimal height for flying pest capture is around 2-3m above the ground. A trap 20 suspended at such a height from the middle of a ceiling is relatively close to the heads of people passing under it, causing health and safety risks and being relatively intrusive and unattractive.

US5022179A discloses an insect trapping device including an elongate body with three sections that can be folded. US7748159B1, EP0976323 and US5950355A each disclose flying pest traps with a housing and an attracting element.

It is an object of the present invention to address the above mentioned disadvantages, and any other disadvantages that will be apparent to the skilled reader from the description below. According to the present invention there is provided an apparatus and method as set forth in the appended claims. Other features of the invention will be apparent from the dependent claims, and the description which follows.

According to an aspect of the invention there is provided a flying pest trap comprising an attracting element and being adapted to retain an immobilisation element, wherein a first housing of the flying pest trap is adapted to be mounted to a wall and a second housing of the flying pest trap is operable to extend away from the first housing and is adapted to retain at least a portion of the immobilisation element.

Preferably, the second housing is operable to extend substantially perpendicularly away from the first housing. Preferably, the second housing is operable to extend away from the first housing at an angle of at least 45°.

Preferably, the second housing is adapted to adopt an orientation that is tilted with respect to the first housing. Preferably, the second housing is adapted to pivot with respect to the first housing. Preferably, the second housing is hinged to the first housing by a hinge. Preferably, the second housing is adapted to pivot to a vertical configuration, in which the first and second housings are in substantially the same vertical plane. Preferably, the second housing is adapted to pivot to a position extending away from the first housing. Preferably, the second housing is adapted to pivot to a horizontal configuration, in which it extends substantially perpendicularly away from the first housing.

Preferably, the first and second housings each comprise an inclined portion proximate to the hinge.

Preferably, the flying pest trap comprises fixing means, adapted to retain the second housing in the horizontal configuration. Preferably, the fixing means are adapted to retain the second housing in the vertical configuration. Preferably, the fixing means are adapted to retain the second housing in a position between the horizontal and vertical configurations, preferably any position between the horizontal and vertical configurations. Preferably, the fixing means comprise friction hinges, adapted to hingedly connect the first and second housing.

Preferably, the second housing comprises at least one attracting element adapted to attract flying pests to the trap. Preferably, the first housing comprises at least one attracting element adapted to attract flying pests to the trap.

Preferably, the first housing is adapted to retain at least a portion of the immobilisation element. Preferably, both the first housing and the second housing are adapted to retain a portion of the immobilisation element.

Preferably, the trap comprises the immobilisation element. Preferably, the immobilisation element is a glue board.

According to a second aspect of the invention there is provided a kit of parts comprising the trap of the first aspect and an immobilisation element.

Further preferred features of the components required in the kit of parts of the second aspect are defined hereinabove in relation to the first aspect and may be combined in any combination.

According to a third aspect of the invention there is provided a method of operating a flying pest trap comprising an attracting element, the method comprising mounting a first housing of the flying pest trap to a wall, such that a second housing of the flying pest trap extends away from the first housing, the second housing retaining at least a portion of an immobilisation element.

The method may further comprise the step of pivoting the second housing so that it extends away from the first housing.

Further preferred features of the method of the third aspect are defined hereinabove in relation to the first and second aspects and may be combined in any combination.

For a better understanding of the invention and to show how the same may be brought into effect, embodiments of the same will now be described with reference to the accompanying drawings, in which:
Figure 1 is a schematic sectional view of a wall-mounted prior art flying pest trap;
Figure 2 is a schematic sectional view of a ceiling-suspended prior art flying pest trap;
Figure 3 is a perspective view of a flying pest trap according to an embodiment of the invention in a first configuration;
Figure 4A is a sectional view of the flying pest trap of Figure 3 in the first configuration;
Figure 4B is a sectional view of the flying pest trap of Figure 3 in a second configuration;
Figure 4C is a sectional view of the flying pest trap of Figure 3 in a third configuration; and
Figure 5 is a perspective view of the flying pest trap of Figure 3 in the third configuration.

Like reference numerals are used to refer to like elements throughout the figures.

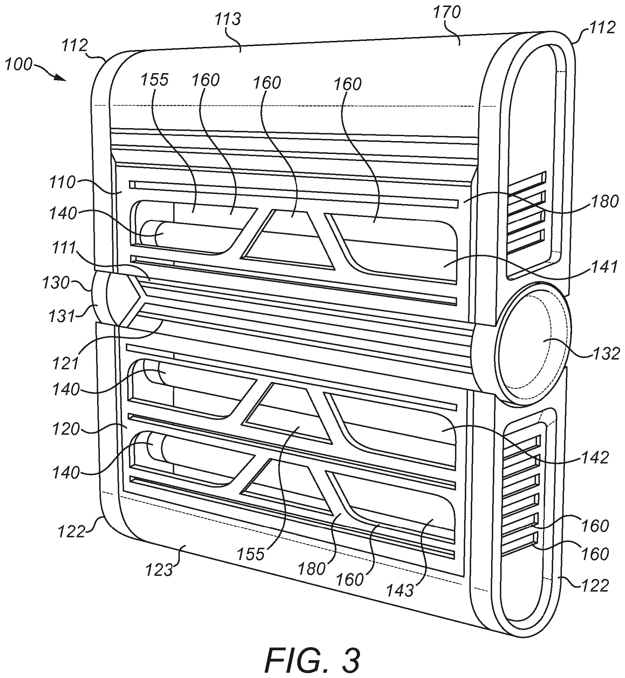

FIG. 3 shows a flying pest trap 100 in accordance with an example embodiment of the invention. The trap 100 comprises a first, upper housing 110 and a second, lower housing 120.

The housings 110, 120 comprise attracting elements 140, which attract flying pests to the trap 100. In the example shown in FIG. 2, the attracting elements 140 comprise a first attracting element 141 disposed in the first housing 110, and second attracting elements 142, 143 disposed in the second housing 120. In one example, the attracting elements comprise UV light sources, such as UV fluorescent tubes.

In one example, the housings 110 comprise side panels 112, 122, forming the vertical sides of each housing, and cover portions 113, 123 extending between the side panels 112, 122 so as to cover the internal elements of the trap 100. In one example, the side panels 112, 122 are injection moulded polycarbonate panels. In one example, the cover portions 113, 123 are formed from rolled steel.

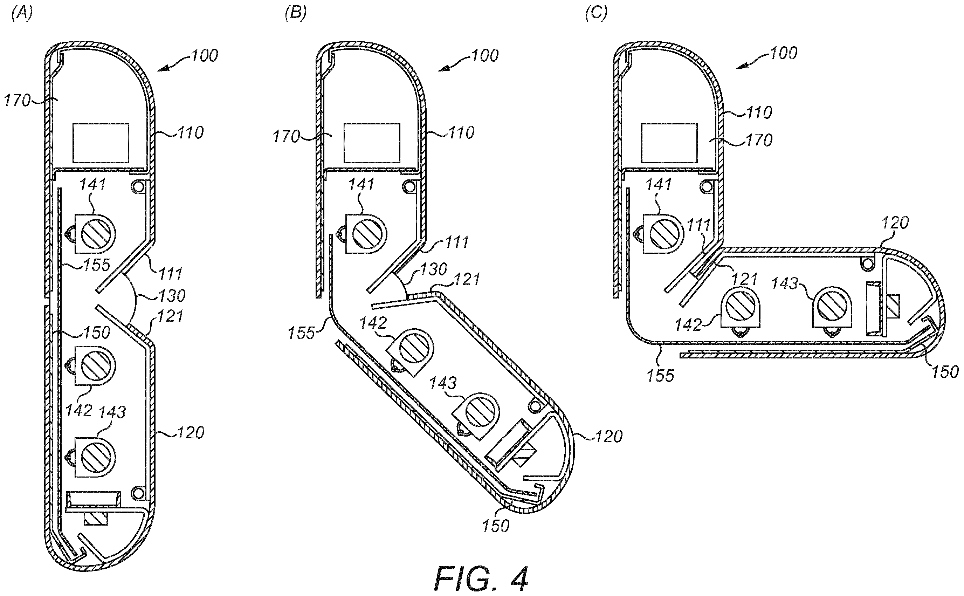

The housings 110, 120 further comprise an immobilisation element retaining portion (150, FIG. 4A), which is adapted to retain an immobilisation element 155, such as a glue board. The retaining portion 150 is disposed so as to hold the immobilisation element 155 behind the attracting elements 140, so as to not obstruct the light output by the attracting elements 140 whilst still being sufficiently proximate to the attracting elements 140 to capture the flying pests attracted thereto. A substantial portion of the immobilisation element 155 is retained within the lower housing 120 by the retaining portion 150. In one example, the retaining portion 150 comprises a channel into which the immobilisation element 155 is placed, comprising a lip 151 at a bottom portion thereof to hold the immobilisation element 155 in the channel.

The immobilisation element 155 is removable, for example by removing a portion of either of the housings 110, 120. Accordingly, once saturated with flying pests, it may be removed and replaced with a new immobilisation element 155. In one example, a side portion of the trap is removed and the immobilisation element 155 is moved laterally into and out of the channel. Additionally or alternatively, a top cover of the upper housing 110 is removed, and the immobilisation element is moved vertically into and out of the channel. In a further example, doors 180 are formed in the upper and lower housings 110, 120, thereby allowing access to the interior of the trap 100.

Apertures 160 are formed in the front and sides of both housings 110, 120, in order to permit the light generated by the attracting elements 140 to escape the trap, and also to allow the ingress of flying pests toward the immobilisation element 155.

Control means, such as switching circuitry and circuitry to control the light output by the attracting elements 150, and a power supply for supplying power to the trap 100 are disposed in an upper portion (170, FIGs 4A - 4C) of the trap 100.

The first, upper housing 110 is adapted to be secured to a wall. Any suitable means of attachment may be employed to secure the housing 110 to the wall, such as screws, nails, brackets, clips, adhesives and so on.

The lower housing 120 is not directly attached to the wall, and is instead secured to the upper housing 110. In one example, the lower housing 120 is pivotally attached to the upper housing 110, by means of a hinging portion 130. The hinging portion 130 comprises substantially circular hinges 131, 132, which are disposed at axially opposite ends of the hinging portion 130, and which are connected to both the upper and lower housings 110, 120 at the respective opposing sidewalls thereof. Accordingly, a hinge is formed that allows the lower housing 120 to pivot with respect to the upper housing 110, so that the lower housing 120 of the trap 100 may be moved away from the wall on which the upper housing 110 is mounted.

In one example, a portion of one or both of the upper and lower housing 110, 120 is shaped to ensure the respective housings 110, 120 are able to pivot without interfering with each other. In one example, the lower portion of the upper housing 110 comprises an inclined portion 111, and the upper portion of the lower housing 120 comprises a corresponding inclined portion 121, so as to allow the lower housing 120 to pivot without interfering with the upper portion 110.

The trap 100 further comprises a fixing means operable to fix the position of lower housing 120 with respect to the upper housing 110. In particular, the hinges 131, 132 are friction hinges, which allow the pivoting of the lower housing 120 when a force is applied by a user, but are adapted so as to retain the lower housing 120 in position once the user releases the housing 120. It will be understood that a fixing means separate from the hinging portion 130 could instead be employed, such as a clip or brace extending from the upper housing 110 to the lower housing 120 to hold them in position.

FIG 4A shows the trap 100 in a first, substantially vertical configuration. In this configuration, the upper and lower housings 110, 120 are disposed in the same vertical plane, so that the rear of the lower housing 120 is in contact with the wall.

FIG 4B shows the trap 100 in a second, partially pivoted configuration. The lower housing 120 is pivoted with respect to the upper housing 110, so that it extends outward from the wall at an angle of approximately 45°. The fixing means holds the lower housing 120 in the partially pivoted configuration. The portion of the immobilisation element 155 that is retained within the lower housing 120 is therefore also held by retaining means 150 at an angle of approximately 45° from the wall. The flexible nature of the immobilisation element 155 means that the portion of the immobilisation element 155 that is retained within the upper housing 110 proximate to the first attracting element 141 remains in a substantially vertical plane.

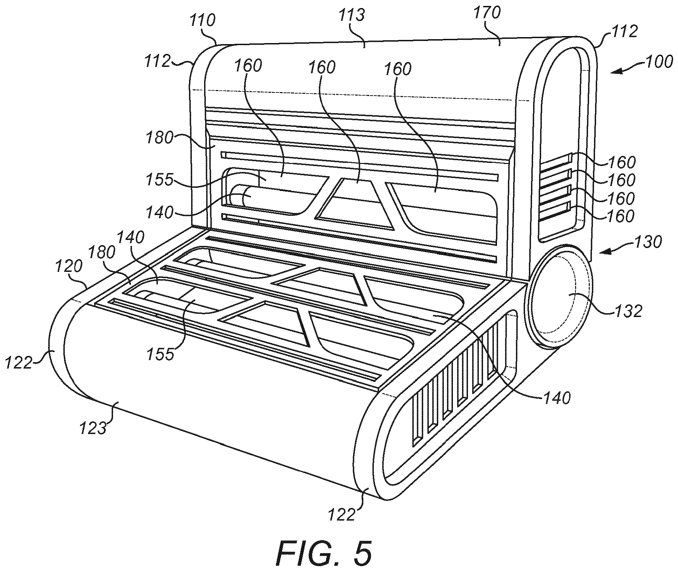

FIGs 4C and FIG 5 show the trap 100 in a third, substantially right-angled configuration, in which the lower housing 120 extends substantially perpendicularly from the wall in a substantially horizontal plane. Again, the fixing means holds the lower housing 120 in the horizontal configuration, and the portion of the immobilisation element 155 that is retained in the lower housing 120 is also held by retaining means 150 in a position extending substantially perpendicularly from the wall.

It will be understood that the hinging portion 130 and fixing means allows for the lower housing 120 to be held at a variety of angles between the vertical and horizontal configurations, and is not limited to the single, partially pivoted configuration shown in FIG 4B. In one example, the hinging portion 130 and fixing means enables infinite adjustment between the vertical and horizontal configurations.

In use, the upper housing 110 of the trap 100 is secured to a wall, and the lower housing 120 is then pivoted to a position in which it extends from the plane of the wall. Accordingly, at least a portion of the immobilisation element 155 is retained in a position in which it extends from the plane of the wall. The attracting elements 140 attract the flying pests towards the trap 100, and the pests enter the trap 100 via apertures 160. Subsequently, the pests land on the immobilisation element 155, with the portion of the immobilisation means 155 extending from the plane of the wall providing a surface on which the pests are more likely to land. Whilst the substantially horizontal configuration provides the most appealing surface for the pests, the intermediate, partially pivoted configurations render the trap less intrusive and are more visually appealing.

When the immobilisation element 155 is saturated with pests, or any other maintenance is required, the user or service engineer pivots the lower housing 120 into the vertical configuration, therefore allowing easier access to the components of the trap 100. Once the maintenance is complete, the lower housing 120 is again pivoted so that it extends from the wall. The lower housing 120 may also be rotated to the vertical configuration when not in use.

Various modifications will be apparent to those skilled in the art. For example, the lower housing 120 may be permanently fixed in the partially pivoted or substantially horizontal configurations, rather than being hingedly attached to the upper housing 110. In addition, hinging mechanisms that enable the relevant movement of the upper and lower housings 110, 20 other than the circular hinges 132 may be employed. The immobilisation element 155 may be retained wholly within the lower housing 120, and that the attracting element 141 disposed in the upper housing 110 could be omitted. The lower housing 120 could be attached to the wall, and the upper housing 110 could instead extend away from the wall. The trap 100 could employ an olfactory lure rather than UV-light based attracting elements.

It will appreciated that the trap 100 provides a convenient, compact and easy to service means of deploying an immobilisation element 155 in a substantially horizontal plane, thereby increasing the likelihood that pests (such as insects) that have been attracted to the trap actually land on the immobilisation element 155 and are captured. Tests carried out by the applicant suggest that 34.8% more flying insects were caught on a horizontally disposed glueboard, in comparison to a vertically disposed glueboard.

It will be further appreciated that the wall-mounted nature of the trap 100 provides a relatively unobtrusive means of disposing a deploying a horizontal immobilisation element 155 at around 2-3m above the ground, when compared to traditional ceiling-suspended traps.

## Claims

1. A flying pest trap (100) comprising an attracting element (140) and being adapted to retain an immobilisation element (155),
wherein a first housing (110) of the flying pest trap (100) is adapted to be mounted to a wall,
**characterised by** comprising a second housing (120) adapted to retain at least a portion of the immobilisation element (155),
wherein the second housing (120) is adapted to pivot with respect to the first housing (110).

2. The trap of claim 1, wherein the second housing is adapted to pivot between:
a vertical configuration, in which the first and second housings (110,120) are in substantially the same vertical plane, and
a horizontal configuration, in which the second housing (120) extends substantially perpendicularly away from the first housing (110).

3. The trap of claim 2, wherein the trap comprises fixing means (130), adapted to retain the second housing (120) in the horizontal configuration.

4. The trap of claim 3, wherein the fixing means (130) are adapted to retain the second housing (120) in any position between the horizontal and vertical configurations.

5. The trap of claim 3 or 4, wherein the fixing means (130) comprise friction hinges (131,132) adapted to hingedly connect the first and second housing (110,120).

6. The trap of any preceding claim, wherein the second housing (120) comprises at least one attracting element (140) adapted to attract flying pests to the trap (100).

7. The trap of any preceding claim, wherein the first housing (110) comprises at least one attracting element (140) adapted to attract flying pests to the trap (100).

8. The trap of any preceding claim, wherein both the first housing (110) and the second housing (120) are adapted to retain a portion of the immobilisation element (155).

9. The trap of any preceding claim, comprising the immobilisation element (155).

10. The trap of any preceding claim, wherein the immobilisation element (155) is a glue board.

11. A kit of parts comprising the trap (100) of any of claims 1 to 10 and an immobilisation element (155).

12. A method of operating a flying pest trap (100) comprising an attraction element, the method comprising:
mounting a first housing (110) of the flying pest trap (100) to a wall, such that a second housing (120) of the flying pest trap (100) pivots with respect to the first housing (110),
the second housing (120) retaining at least a portion of an immobilisation element (155).

## Patentansprüche

1. Flugschädlingsfalle (100), umfassend ein Anlockelement (140) und dazu angepasst, ein Immobilisierungselement (155) aufzunehmen,
wobei ein erstes Gehäuse (110) der Flugschädlingsfalle (100) zum Montieren an einer Wand angepasst ist,
**gekennzeichnet durch** Umfassen eines zweiten Gehäuses (120), das dazu angepasst ist, mindestens einen Teil des Immobilisierungselements (155) aufzunehmen,
wobei das zweite Gehäuse (120) zum Schwenken in Bezug auf das erste Gehäuse (110) angepasst ist.

2. Falle gemäß Anspruch 1, wobei das zweite Gehäuse dazu angepasst ist, zu schwenken zwischen:
einer vertikalen Ausbildung, in der das erste und das zweite Gehäuse (110, 120) im Wesentlichen in der gleichen vertikalen Ebene liegen, und
einer horizontalen Ausbildung, in der sich das zweite Gehäuse (120) im Wesentlichen rechtwinklig vom ersten Gehäuse (110) weg erstreckt.

3. Falle gemäß Anspruch 2, wobei die Falle Befestigungsmittel (130) umfasst, die dazu angepasst sind, das zweite Gehäuse (120) in der horizontalen Ausbildung zu halten.

4. Falle gemäß Anspruch 3, wobei die Befestigungsmittel (130) dazu angepasst sind, das zweite Gehäuse (120) in jeder Stellung zwischen der horizontalen und vertikalen Ausbildung zu halten.

5. Falle gemäß Anspruch 3 oder 4, wobei die Befestigungsmittel (130) Reibungsscharniere (131, 132) umfassen, die dazu angepasst sind, das erste und das zweite Gehäuse (110, 120) gelenkig zu verbinden.

6. Falle gemäß einem der vorhergehenden Ansprüche, wobei das zweite Gehäuse (120) mindestens ein Anlockelement (140) umfasst, das dazu angepasst ist, fliegende Schädlinge zur Falle (100) zu locken.

7. Falle gemäß einem der vorhergehenden Ansprüche, wobei das erste Gehäuse (110) mindestens ein Anlockelement (140) umfasst, das dazu angepasst ist, fliegende Schädlinge zur Falle (100) zu locken.

8. Falle gemäß einem der vorhergehenden Ansprüche, wobei sowohl das erste Gehäuse (110) als auch das zweite Gehäuse (120) dazu angepasst sind, einen Teil des Immobilisierungselements (155) zu halten.

9. Falle gemäß einem der vorhergehenden Ansprüche, umfassend das Immobilisierungselement (155).

10. Falle gemäß einem der vorhergehenden Ansprüche, wobei das Immobilisierungselement (155) ein Klebebrett ist.

11. Teilesatz, umfassend die Falle (100) gemäß einem der Ansprüche 1 bis 10 und ein Immobilisierungselement (155) .

12. Verfahren zum Betreiben einer Flugschädlingsfalle (100), umfassend ein Anlockelement, wobei das Verfahren umfasst:
Montieren eines ersten Gehäuses (110) der Flugschädlingsfalle (100) an einer Wand, sodass ein zweites Gehäuse (120) der Flugschädlingsfalle (100) in Bezug auf das erste Gehäuse (110) schwenkt,
wobei das zweite Gehäuse (120) mindestens einen Teil eines Immobilisierungselements (155) aufnimmt.

## Revendications

1. Piège à insectes nuisibles volants (100) comprenant un élément attirant (140) et conçu pour retenir un élément d'immobilisation (155),
un premier boîtier (110) du piège à insectes nuisibles volants (100) étant conçu pour être monté à un mur,
le piège étant **caractérisé en ce qu'**il comprend un second boîtier (120) conçu pour retenir au moins une partie de l'élément d'immobilisation (155),
le second boîtier (120) étant conçu pour pivoter par rapport au premier boîtier (110).

2. Piège selon la revendication 1, dans lequel le second boîtier est conçu pour pivoter entre :
une configuration verticale, dans laquelle les premier et second boîtiers (110, 120) sont dans sensiblement le même plan vertical, et
une configuration horizontale, dans laquelle le second boîtier (120) s'étend sensiblement perpendiculairement à l'opposé du premier boîtier (110).

3. Piège selon la revendication 2, le piège comprenant des moyens de fixation (130) conçus pour retenir le second boîtier (120) dans la configuration horizontale.

4. Piège selon la revendication 3, dans lequel les moyens de fixation (130) sont conçus pour retenir le second boîtier (120) dans une position quelconque entre les configurations horizontale et verticale.

5. Piège selon la revendication 3 ou 4, dans lequel les moyens de fixation (130) comprennent des charnières à friction (131, 132) conçues pour relier par charnière les premier et second boîtiers (110, 120).

6. Piège selon l'une quelconque des revendications précédentes, dans lequel le second boîtier (120) comprend au moins un élément attirant (140) conçu pour attirer des insectes nuisibles volants jusqu'au piège (100).

7. Piège selon l'une quelconque des revendications précédentes, dans lequel le premier boîtier (110) comprend au moins un élément attirant (140) conçu pour attirer des insectes nuisibles volants jusqu'au piège (100).

8. Piège selon l'une quelconque des revendications précédentes, dans lequel le premier boîtier (110) et le second boîtier (120) sont l'un et l'autre conçus pour retenir une partie de l'élément d'immobilisation (155).

9. Piège selon l'une quelconque des revendications précédentes, comprenant l'élément d'immobilisation (155).

10. Piège selon l'une quelconque des revendications précédentes, dans lequel l'élément d'immobilisation (155) est une feuille adhésive.

11. Kit de pièces comprenant le piège (100) selon l'une quelconque des revendications 1 à 10 et un élément d'immobilisation (155).

12. Procédé de fonctionnement d'un piège à insectes nuisibles volants (100) comprenant un élément attirant, le procédé comprenant les étapes consistant à :
monter un premier boîtier (110) du piège à insectes nuisibles volants (100) à un mur, de sorte qu'un second boîtier (120) du piège à insectes nuisibles volants (100) pivote par rapport au premier boîtier (110),
le second boîtier (120) retenant au moins une partie d'un élément d'immobilisation (155).
